# EUROPÄISCHE PATENTSCHRIFT

(11) **EP 1 541 531 B1**
(45) Veröffentlichungstag und Bekanntmachung des Hinweises auf die Patenterteilung: **06.10.2010**
(21) Anmeldenummer: 04026110.9
(22) Anmeldetag: 04.11.2004
(51) Int. Cl.: C02F 1/52, C02F 1/28

(54) **Verfahren zur Gewinnung von Phosphor in Form von Phosphaten aus Abwässern**
Process to recover phosphates from phosphorus containing wastewater
Procédé pour récupérer des phosphates de l'eau chargée en phosphore

(30) Priorität: 10.12.2003 DE 10357544
(43) Veröffentlichungstag der Anmeldung: 15.06.2005
(73) Patentinhaber: Karlsruher Institut für Technologie, 76131 Karlsruhe (DE)
(72) Erfinder: Berg, Ute, Dr., 76137 Karlsruhe (DE); Weidler, Peter, Dr., 76297 Stutensee (DE); Salecker, Manfred, 76297 Stutensee (DE); Donnert, Dietfried, Dr., 76137 Karlsruhe (DE)
(74) Vertreter: Rückert, Friedrich

(56) Entgegenhaltungen:
- EP-A- 1 176 121

## Beschreibung

Die Erfindung betrifft ein Verfahren zur Gewinnung von Phosphor in Form von Phosphaten aus phosphathaltigen Abwässern die organischen Kohlenstoff enthalten.

Aus D. Donnert, U. Berg, P. G. Weidler, Y. Song, und M. Salecker, Phosphatrückgewinnung aus Abwässern durch Kristallisation an Tobermorit, Symposium Rückgewinnung von Phosphor in der Landwirtschaft und aus Abwasser und Abfall, 6.-7. Februar 2003, Berlin; Tagungsband 18/1-18/22, ist bekannt, dass die Weltreserven an Phosphor, der für die Phosphorindustrie, als Düngemittel usw. eingesetzt wird, auf ca. 100 Jahre geschätzt werden, wobei die Qualität der vorhandenen Erze abnimmt. Daher bestehen weltweit Anstrengungen, Phosphor aus recycliertem Material zurück zu gewinnen. In erster Linie kommen hierfür kommunale und industrielle Abwässern in Frage.

Für die Rückgewinnung aus Abwässern sind zwei Wege denkbar:
- Die Rückgewinnung aus Schlämmen bzw. Aschen aus der Schlammverbrennung, die zwar bis zu 90 % des gesamten Phosphors erfassen, aber aufwändige Verfahren erfordern.
- Die Rückgewinnung aus der Wasserphase, die einfacher durchführbar ist, dafür aber nach dem Stand der Technik nur bis zu 40 % des gesamten Phosphors erfassen.

In der DE 37 32 896 A1 ist die Ausfällung von Phosphor aus Wasser in Form von Magnesium-Ammonium-Phosphat offenbart, die gleichzeitig als analytischer Nachweis dient.

Die DE 42 39 554 A1 offenbart die Entfernung von Phosphor aus Wasser mit alkalischen Alkalimetall-Aluminatlaugen. Aus der DE 43 25 535 C2 ist die Simultanfällung durch Eisen- und Aluminium-Verbiridungen bei pH 9,0 bekannt. Die DE 196 51 135 A1 offenbart die Simultanfällung durch Ca- und Fe(II)- Verbindungen bei pH 9,0.

Den genannten Verfahren ist gemeinsam, dass diese im alkalischen Milieu ablaufen, was nach D. Donnert, M. und Salecker, Elimination of phosphorus from Waste Water by Crystallisation, Environmental Technology Band 20, Seite 735-742, 1999, den Wirkungsgrad der Phosphat-Elimination erheblich reduziert sowie den Einsatz von Neutralisierungsagenzien erfordert, wodurch sich die Standzeit der Filter deutlich verringert.

Aus D. Donnert, M. Salecker und S. H. Eberle, Phosphatelimination aus Wasser durch impfkristallinduzierte Abscheidung von Calciumphosphat, Wasser und Boden, 5/1993, Seiten 312-316, ist ein Verfahren zur Gewinnung von Phosphaten aus Wasser bekannt, bei dem Calcit als Impfmaterial ohne Vorbehandlung Abwässern, die organischen Kohlenstoff enthalten, zugegeben wird.

Aus A. S. Brooks, M. N. Rozenwald, L. D. Geohring, L. W. Lion, T. S. Steenhuis, Phosphorus removal by wollastonite: A constructed wetland substrate, Ecological Engineering, Band 15, 2000, Seite 121-132, ist bekannt, Wollastonit, ein natürlich vorkommendes Calciummetasilicat, vor der Zuführung von phosphorhaltigen Abwässern mit Calciumphosphat-Kristalliten zu beladen. Den Daten der dort angegebenen Vergleichsversuche mit nicht vorbeladenem Wollastonit kann jedoch entnommen werden, dass die Phophor-Eliminationsrate durch die Vorbeladung nicht beeinflusst wird.

Der Erfindung liegt die Aufgabe zugrunde, ein Verfahren zur Gewinnung von Phosphor in Form von Phosphaten aus Abwässern die organischen Kohlenstoff enthalten, anzugeben, das die genannten Nachteile und Einschränkungen nicht aufweist. Insbesondere soll ein Verfahren mit einem hohen Wirkungsgrad der Phosphorgewähnung aus Abwässern angegeben werden, das einen geringen Bedarf an Chemikalien erfordert und bei neutralem pH-Wert abläuft:
Die Aufgabe wird durch das Verfahren gemäß Anspruch 1 gelöst.
Die Unteransprüche beschreiben vorteilhafte Ausgestaltungen der Erfindung.

Zur Durchführung des erfindungsgemäßen Verfahrens wird Calciumcarbonat bereitgestellt, das vorab derart mit Phosphat beladen wird, dass sich an dessen Oberfläche Kristallite aus Calciumphosphät bilden. Zu dem so beladenen Calciumcarbonat werden erst dann phosphathaltige Abwässer zugeführt, wodurch Phosphat aus dem Abwasser die Oberfläche des beladenen Calciumcarbonats belegt. Schließlich wird das mit Phosphat beladene Calciumcarbonat zu weiteren Verarbeitung entnommen.

Die Erfindung geht vom Grundgedanken aus, dass Phosphat aus phosphathaltigem Abwasser bevorzugt die Oberfläche von Calciumcarbonat belegt, das zuvor mit Phosphat vorbehandelt wurde. Hierzu genügt es, kommerziell in großen Mengen erhältliches Calciumcarbonat, vorzugsweise Juraperle, in geringen Mengen mit Phosphat, bevorzugt aus einer Lösung aus Natriumdihydrogenphosphat (NaH₂PO₄), zu beladen. Ausreichend für den praktischen Einsatz sind weniger als drei Gewichtsprozente, besonders bevorzugt weniger als ein Gewichtsprozent Phosphorgehalt bezogen auf Calciumcarbonat. Dieser erfindungsgemäße Verfahrensschritt kann auch als Animpfen zur Initiierung einer Kristallisation von Calciumphosphat betrachtet werden.

Es ist zwar bekannt, Phosphate aus reinem phosphathaltigem Leitungswasser mittels Calciumcarbonat in Form von Juraperle, einem bergmännisch gewonnenen billigem Produkt, zu entfernen. Bei der Einleitung von kommunalen oder industriellen Abwässern tritt dagegen durch den darin immer vorhandenen organischen Kohlenstoff eine starke Verzögerung der Abscheidung des Phosphates ein, wodurch die Phosphorgewinnung gemäß D. Donnert, M. und Salecker, Elimination of phosphorus from Waste Water by Crystallisation, Environmental Technology Band 20, Seite 735-742, 1999, nur bei gleichzeitiger Erhöhung des pH-Werts sinnvoll durchgeführt werden kann, da ansonsten die Standzeit der Filter bzw. der Wirkungsgrad der Phosphatelimination im Vergleich zu der erfindungsgemäß vorbehandelten Juraperle viel zu gering ist.

Ebenso wenig ist der direkte Einsatz von Calciumphosphat (Apatit) zur Phosphorgewinnung aus Abwässern geeignet. Nachteilig sind dessen Carbonatgehalt sowie der im Wasser gelöste organische Kohlenstoff.

Die wesentlichen Vorteile des erfindungsgemäßen Verfahrens bestehen darin, dass dieses einen geringen Verbrauch an Chemikalien erfordert und bei neutralem pH-Wert, d.h. bei einem pH-Wert zwischen 6 und 8, bevorzugt zwischen 6,5 und 7,5 durchgeführt wird. Diese Eigenschaften vermeiden die sonst erforderliche Aufsalzung des Abwassers zur Entfernung der Anionen bei der Phosphor-Elimination im alkalischen Milieu. Außerdem entfällt die Einstellung des pH-Werts des Wassers, wodurch Kosten weder durch Regelungseinrichtungen noch durch Chemikalien anfallen. Ein weiterer Vorteil besteht darin, dass bevorzugt das bergmännisch gewonnene kostengünstige Produkt Juraperle eingesetzt werden kann. Ebenso vorteilhaft ist, dass das Verfahren einen hohen Wirkungsgrad in Bezug auf die Phosphor-Gewinnung aufweist. Die genannten Vorteile wiegen den scheinbaren Nachteil, dass Calciumcarbonat durch Vorbeladung mit Phosphat insgesamt weniger Phosphat aus dem Abwasser anlagern kann, bei weitem auf.

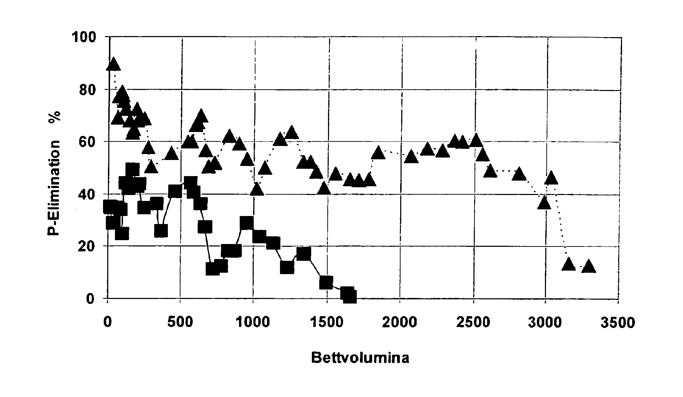

Die Erfindung wird im Folgenden anhand eines Ausführungsbeispiels und der Figur näher erläutert.

1000 g Calciumcarbonat (Calcit) Juraperle wurden mit 5 Liter einer Lösung von NaH2PO4 (Natriumdihydrogenphosphat) in einer Konzentration, die 500 mg/l Phosphor entsprach, 24 Stunden geschüttelt und dann dekantiert. Die Analyse des getrockneten Materials ergab eine Beladung von 5,7 mg Phosphor je g Calcit, was einem Phosphorgehalt von 0,57 Gewichtsprozenten entspricht. Das so gewonnene Material wurde dann direkt im Säulenversuch im Dauerbetrieb eingesetzt.

Die Figur zeigt die Phosphat-Elimination von Abwasser mit unbehandelter (■) sowie mit Phosphat vorbeladener Juraperle (▲) aus dem Ablauf der biologischen Kläranlage des Forschungszentrums Karlsruhe. Die Ausgangskonzentration an Phosphor betrug ca. 10 mg/l Phosphor. Beide Kurven zeigen Säulenversuche, wobei die Durchströmung von unten nach oben erfolgte, mit jeweils 1 Stunde Aufenthaltszeit. Die behandelte Juraperle wies eine Beladung von 5,7 mg/g Phosphor, entsprechend 0,57 Gewichtsprozenten, auf.

## Patentansprüche

1. Verfahren zur Gewinnung von Phosphor in Form von Phosphaten aus phosphathaltigen Abwässern, die organischen Kohlenstoff enthalten, umfassend die Schritte:
a) Bereitstellen von Calciumcarbonat, das zuvor mit einer wässrigen Lösung aus Phosphat behandelt wurde, wobei sich an der Oberfläche des Calciumcarbonats Kristallite aus Calciumphosphat bilden, und nach diesem Schritt mit weniger als drei Gewichtsprozent Phosphor beladen ist,
b) Zuführung der Abwässer bei einem pH-Wert zwischen 6 und 8, wodurch Phosphat aus den Abwässern die Oberfläche des beladenen Calciumcarbonats belegt,
c) Entnehmen des mit Phosphat belegten Calciumcarbonats.

2. Verfahren nach Anspruch 1, **dadurch gekennzeichnet, dass** der Phosphorgehalt des nach Schritt a) behandelten Calciumcarbonats weniger als ein Gewichtsprozent beträgt.

3. Verfahren nach Anspruch 1 oder 2 , **dadurch gekennzeichnet, dass** Calciumcarbonat gemäß Schritt a) mit einer Lösung aus NaH₂PO₄ (Natriumdihydrogenphosphat) beladen wird.

4. Verfahren nach einem der Ansprüche 1 bis 3, **dadurch gekennzeichnet, dass** Calciumcarbonat in Form von Juraperle bereitgestellt wird.

5. Verfahren nach einem der Ansprüche 1 bis 4, **dadurch gekennzeichnet, dass** der pH-Wert einen Wert zwischen 6,5 und 7,5 annimmt.

## Claims

1. Method for recovering phosphorus in the form of phosphates from phosphatic waste water that contains organic carbon, said method comprising the steps:
a) preparation of calcium carbonate, which has been treated beforehand with an aqueous solution made of phosphate, wherein crystallites made of calcium phosphate form on the surface of the calcium carbonate, and after this step is charged with less than three percent by weight phosphorous,
b) supplying the waste water at a pH value of between 6 and 8, phosphate from the waste water thereby covering the surface of the charged calcium carbonate,
c) removal of the calcium carbonate covered by phosphate.

2. Method according to Claim 1, **characterized in that** the phosphorous content of the calcium carbonate treated after step a) is less than one percent by weight.

3. Method according to Claim 1 or 2, **characterized in that** calcium carbonate is charged in step a) with a solution made of NaH₂PO₄ (sodium dihydrogen phosphate).

4. Method according to one of Claims 1 to 3, **characterized in that** calcium carbonate is prepared in the form of Jura beads.

5. Method according to one of Claims 1 to 4, **characterized in that** the pH value assumes a value of between 6.5 and 7.5.

## Revendications

1. Procédé pour récupérer du phosphore sous la forme de phosphate dans des eaux usées chargées de phosphate, et contenant du carbone organique,
procédé comprenant les étapes suivantes :
a) fourniture de carbonate de calcium qui a été préalablement traité avec une solution aqueuse de phosphate, des cristallites de phosphate de calcium se formant à la surface du carbonate de calcium et après cette étape, la charge est inférieure à trois pourcents en poids de phosphore,
b) fourniture des eaux usées ayant un pH compris entre 6 et 8, pour déposer le phosphate des eaux usées à la surface du carbonate de calcium chargé,
c) prélèvement du carbonate de calcium chargé de phosphate.

2. Procédé selon la revendication 1,
**caractérisé en ce que**
la teneur en phosphate du carbonate de calcium traité selon l'étape a) représente moins de un pourcent en poids.

3. Procédé selon la revendication 1 ou 2,
**caractérisé en ce que**
le carbonate de calcium selon l'étape a) est chargé d'une solution de NaH₂PO₄ (phosphate dihydrogéné de sodium).

4. Procédé selon l'une des revendications 1 à 3,
**caractérisé en ce que**
le carbonate de calcium est fourni sous la forme de perles jurassiques.

5. Procédé selon l'une des revendications 1 à 4,
**caractérisé en ce que**
le pH a une valeur comprise entre 6,5 et 7,5.
